# EUROPÄISCHE PATENTSCHRIFT

(11) **EP 1 552 161 B1**
(45) Veröffentlichungstag und Bekanntmachung des Hinweises auf die Patenterteilung: **21.06.2006**
(21) Anmeldenummer: 03750145.9
(22) Anmeldetag: 06.10.2003
(51) Int. Cl.: F04D 29/22

(54) **LAUFRAD F R EINE PUMPE**
IMPELLER FOR A PUMP
ROTOR DE POMPE

(30) Priorität: 17.10.2002 AT 15782002
(43) Veröffentlichungstag der Anmeldung: 13.07.2005
(73) Patentinhaber: Bitter Engineering & Systemtechnik GmbH, 4523 Neuzeug (AT)
(72) Erfinder: SCHOBER, Martin, A-4591 Molln (AT); FEICHTINGER, Gerald, A-4552 Wartberg (AT)
(74) Vertreter: Babeluk, Michael
(86) Internationale Anmeldenummer: PCT/AT2003/000312
(87) Internationale Veröffentlichungsnummer: WO 2004/036054

(56) Entgegenhaltungen:
- EP-A- 0 760 428
- US-A- 5 209 641
- US-A- 6 139 274

## Beschreibung

Die Erfindung betrifft ein Laufrad für eine Pumpe, insbesondere für eine Kühlwasserpumpe einer Brennkraftmaschine mit innerer Verbrennung, mit einer Nabe, einer saugseitigen Deckscheibe mit einer zentralen Öffnung zum Ansaugen eines Fördermediums und mit einer Schaufel, die mit der saugseitigen Deckscheibe einstückig verbunden ist und die einen inneren Abschnitt im Bereich der zentralen Öffnung und einen äußeren Abschnitt im Bereich der Deckscheibe aufweist.

Die Laufräder von Radialpumpen, wie sie etwa als Kühlwasserpumpen von Kraftfahrzeugen eingesetzt werden, sind überwiegend als sogenannte geschlossene Laufräder ausgebildet. Dies bedeutet, dass Schaufeln zwischen zwei Deckscheiben eingeschlossen sind, wodurch sich innerhalb des Laufrades geschlossene Strömungskanäle ausbilden. Solche geschlossenen Laufräder ermöglichen die Erzielung von hohen Pumpenwirkungsgraden. Nachteilig ist jedoch, dass die Herstellung solcher Laufräder aufwendig ist. Eine solche Herstellung kann beispielsweise in zweiteiliger Form dadurch erfolgen, dass einerseits eine Deckscheibe mit daran angeformten Schaufeln und andererseits die andere Deckscheibe getrennt voneinander hergestellt werden und zum endgültigen Laufrad verbunden werden. Eine solche Lösung ist beispielsweise in der US 2,710,580 A gezeigt. Es ist aber auch möglich, ein solches Laufrad einstückig in einem Gießverfahren herzustellen, wobei jedoch dabei eine aufwendige mehrteilige Gießform erforderlich ist, die mit einer Mehrzahl von Schiebern ausgestattet ist, die die Fließkanäle ausformen.

Um die Herstellung eines solchen Laufrades einfach und kostengünstig gestalten zu können, ist es wünschenswert, ein Laufrad zu entwerfen, das mit einer einfachen zweiteiligen Gießform hergestellt werden kann. Die DE 40 40 200 A zeigt eine solche Lösung, bei der das Laufrad eine druckseitige Deckscheibe und eine saugseitige Deckscheibe aufweist, zwischen denen die Schaufeln angeordnet sind, wobei die saugseitige Deckscheibe eine zentrale Öffnung aufweist, deren Innendurchmesser größer ist als der Außendurchmesser der druckseitigen Deckscheibe. Sofern die Schaufeln ohne Hinterschneidungen ausgebildet sind, kann ein solches Laufrad in einer zweiteiligen Form hergestellt werden, da die Entformung problemlos möglich ist. Nachteilig bei einem solchen Laufrad ist jedoch, dass der Wirkungsgrad aufgrund der zwingenden geometrischen Bedingungen relativ bescheiden und wesentlich geringer als bei geschlossenen Laufrädern ist. Eine weitere einfach herzustellende Lösung mit einem Laufrad mit ebenen Schaufeln und einem dementsprechend bescheidenen Wirkungsgrad, wobei jedoch hier die Funktionsfähigkeit in beiden Drehrichtungen im Vordergrund steht.

Es ist bekannt, durch den Einsatz von dreidimensional gekrümmten Schaufeln den Pumpenwirkungsgrad von Radialpumpen oder Axialpumpen verbessern zu können. Eine solche Lösung ist beispielsweise in der DE 100 50 108 A beschrieben. Die Herstellung solcher Laufräder ist jedoch äußerst schwierig und aus kosten- und prozesstechnischen Gründen für den Einsatz in der Massenproduktion nicht geeignet. Die DE 197 42 023 A offenbart ein aus mehreren Segmenten zusammengesetztes Laufrad, bei dem die einzelnen Teile zwar leicht herstellbar sind, das jedoch insgesamt komplex und entsprechend aufwendig ist. Ein weiters Laufrad mit insgesamt dreidimensional gekrümmten Schaufeln ist in der JP 59165895 A beschrieben. Auch hier ist die Herstellung entsprechend aufwendig.

Die DE 44 24 257 A zeigt eine Zentrifugalpumpe mit einem Laufrad, das ebene Schaufeln aufweist. Die Pumpe ist so ausgebildet, dass sie in beiden Drehrichtungen gleichermaßen gut funktioniert. Der Wirkungsgrad dieser Pumpe ist allerdings begrenzt.

Die US 2,710.580 A zeigt ein geschlossenes Laufrad für eine Pumpe, das zur vereinfachten Herstellung aus zwei Einzelteilen zusammengesetzt ist. Dies ist im Hinblick auf eine möglichst einfache Herstellung in vielen Fällen nicht erwünscht.

Die DE 197 42 023 A offenbart ein Laufrad für eine Pumpe mit räumlich gekrümmten Schaufeln, die zur vereinfachten Herstellung aus mehreren radialen Segmenten zusammengesetzt ist. Zusätzlich dazu wird eine Deckscheibe aufgesetzt, so dass ein geschlossenes Laufrad entsteht. Die obigen Ausführungen gelten sinngemäß.

Die US 5,039.320 A betrifft eine Pumpe für zähe Suspensionen, die mit herkömmlichen Radialpumpen nicht förderbar sind. Die JP 59-165895 A zeigt wiederrum ein Laufrad mit durchgängig dreidimensional gekrümmten Schaufeln. Ein solches Laufrad ist entsprechend schwierig herzustellen, wie dies in der Beschreibungseinleitung dargelegt ist.

Die EP 760 428 offenbart ein Laufrad, das auf der der Deckscheibe gegenüberliegenden Druckseite vollständig offen ausgebildet ist.

Die US 6,139,274 A offenbart ein Laufrad mit einer saugseitigen Deckscheibe im periphären Bereich und einer druckseitigen Deckscheibe im zentralen Bereich. Konstruktiv sind die Freiheitsgrade beim Einsatz eines solchen Laufrads beschränkt.

Aufgabe der vorliegenden Erfindung ist es, ein Laufrad für eine Pumpe anzugeben, das diese Nachteile vermeidet und den Vorteil der leichten Herstellbarkeit mit einem hohen Wirkungsgrad verbindet.

Erfindungsgemäß ist vorgesehen, dass das Laufrad auf der der Deckscheibe gegenüberliegenden Druckseite vollständig offen ausgebildet ist und dass die Schaufel zumindest im inneren Abschnitt dreidimensional gekrümmt und im äußeren Abschnitt im Wesentlichen zweidimensional gekrümmt ausgebildet ist. Wesentlich an der Erfindung ist, dass es durch die spezielle Ausbildung der Schaufel gelingt, auch bei einem offenen Laufrad hohe Wirkungsgrade erzielen zu können. Dabei wird jedoch nicht wie bei bekannten Pumpen für schmutzhaltige Medien oder dgl. ein auf der Saugseite offenes Laufrad eingesetzt, sondern ein druckseitig offenes Laufrad. Als dreidimensionale Krümmung im Sinn der Erfindung wird eine Ausbildung der Schaufeln verstanden, die nicht nur eine gekrümmte Form in Radialrichtung, sondern auch eine Schrägstellung oder Krümmung in Axialrichtung aufweisen.

Im Fall der Förderung zäher Medien kann das Laufrad eine einzige Schaufel aufweisen. Im Allgemeinen werden jedoch mehrere Schaufeln vorgesehen sein.

Es ist theoretisch möglich, dass die Schaufeln in ihrer Gesamtheit im obigen Sinn dreidimensional gekrümmt sind, wodurch höchste Wirkungsgrade erreichbar sind. Bei einer solchen Lösung ist es jedoch bei Verwendung einer zweiteiligen Gießform erforderlich, beim Entformen die beiden Formhälften nicht nur linear auseinander zu bewegen, sondern dabei gleichzeitig zu verdrehen, d.h. die Gießformen in einer Schraubenbewegung zu führen. Dies stellt einen Aufwand dar, der zwar geringer ist als das Vorsehen von Schiebern, wie beim Stand der Technik, der aber ebenfalls nach Möglichkeit vermieden werden sollte. Es hat sich im Zuge der Entwicklungsarbeiten herausgestellt, dass ein Großteil der möglichen Verbesserung des Wirkungsgrades bereits erreicht wird, wenn das Laufrad im inneren Abschnitt dreidimensional, also im Wesentlichen schraubenförmig gekrümmt ist, so dass im äußeren Abschnitt eine herkömmliche, zweidimensionale Form beibehalten werden kann. Wenn die Schaufeln im inneren Abschnitt dabei frei von Überdeckungen und Hinterschneidungen sind, d.h., wenn die Hinterkante einer Schaufel in axialer Betrachtung vor der Vorderkante der nächsten Schaufel liegt, dann kann das Laufrad in einer zweiteiligen Form hergestellt werden und durch einfache translatorische Bewegung der beiden Formhälften entformt werden.

Auf diese Weise kann das Laufrad in einfacher Weise, beispielsweise in einem Druckgussverfahren oder auch in einem Kunststoffspritzgussverfahren, hergestellt Werden. Es ist jedoch auch möglich, Stahlguss- oder Graugussverfahren einzusetzen. Unter Umständen können auch Blechumformtechniken eingesetzt werden.

Besonders günstig zur Erhöhung des Wirkungsgrades hat es sich herausgestellt, wenn an der Deckscheibe im Bereich der Öffnung ein axialer Vorsprung vorgesehen ist, der in Richtung der Saugseite vorragt. Auf diese Weise ist es möglich, den strömungstechnisch besonders kritischen Einlaufbereich optimal auszubilden.

Eine besonders einfache Herstellung des Laufrades und auch der Pumpe selbst kann erreicht werden, wenn die Schaufeln zumindest im zweiten Abschnitt an der Druckseite eine Stirnfläche aufweisen, die in einer zur Achse des Laufrades senkrechten Ebene liegt.

In einer besonders begünstigten Ausführungsvariante der Erfindung ist vorgesehen, dass die Schaufeln eine konvexe Oberfläche aufweisen, die glatt von dem ersten Abschnitt in den zweiten Abschnitt übergeht. Auf diese Weise kann das Auftreten von Kavitationseffekten weitgehend vermieden werden und es kann eine optimale Strömungsumlenkung erreicht werden. Weiters kann vorgesehen sein, dass die Schaufeln eine konkave Oberfläche aufweisen, die mit einer Kante von dem ersten Abschnitt in den zweiten Abschnitt übergeht, wodurch eine leichte Entformbarkeit gewährleistet ist. Eine besonders einfache Lösung sieht vor, dass die Schaufeln im zweiten Abschnitt einen im Wesentlichen rechteckigen Querschnitt aufweisen. Als im Wesentlichen rechteckiger Querschnitt wird in diesem Sinne ein Querschnitt bezeichnet, der die minimal erforderlichen Gussschrägen aufweist, also im Grunde genommen trapezförmig ist.

Um einen strömungstechnisch gesehen günstigeren Übergang von dem inneren Abschnitt auf den äußeren Abschnitt der Schaufeln zu erreichen, kann vorgesehen sein, dass die Schaufeln im zweiten Abschnitt zumindest teilweise einen trapezförmigen Querschnitt aufweisen. Dabei wird der trapezförmige Querschnitt hauptsächlich im inneren Bereich des äußeren Abschnittes ausgebildet sein und nach außen hin im Allgemeinen in einen im Wesentlichen rechteckigen Querschnitt übergehen.

Das erfindungsgemäße Laufrad ist insbesondere für Radialpumpen geeignet, auch wenn eine Ausführung für Axialpumpen denkbar ist. Insbesondere für den ersten Fall ist es bevorzugt, wenn der Durchmesser d der Öffnung der Deckscheibe 30% bis 70%, vorzugsweise etwa 50% des Durchmessers des Laufrades entspricht. Auf diese Weise kann ein besonders hoher Wirkungsgrad erzielt werden.

Weiters betrifft die vorliegende Erfindung eine Pumpe, insbesondere eine Kühlwasserpumpe für eine Brennkraftmaschine mit innerer Verbrennung, mit einem Lager, in dem eine Pumpenwelle drehbar gelagert ist, die durch eine Gehäusewand hindurchtritt und auf der auf der dem Lager gegenüberliegenden Seite der Gehäusewand ein Laufrad mit axialer Ansaugöffnung und vorzugsweise radialem Ausstoß befestigt ist, die mit einem Laufrad, wie es oben beschrieben ist, ausgestattet ist. Eine solche Pumpe ist einfach und mit geringem Kostenaufwand herstellbar und besitzt einen hohen Wirkungsgrad. Die Pumpe kann in bekannter Weise durch Riemen oder auch elektromotorisch angetrieben sein.

Besonders bevorzugt ist es, wenn in der Gehäusewand eine Gleitringdichtung zur Abdichtung der Pumpenwelle vorgesehen ist, die offen im Strom des Fördermediums liegt. Es hat sich herausgestellt, dass die Lebensdauer einer -Gleitringdichtung erhöht werden kann, wenn diese nicht nur im Wesentlichen statisch dem Fördermedium ausgesetzt ist, sondern wenn sie regelmäßig von diesem umspült wird, so dass ein Trockenlauf sicher vermieden werden kann. Auch die Leckagemengen können auf diese Weise verringert werden. Besonders günstig für den Wirkungsgrad ist es, wenn die Gehäusewand unmittelbar an eine Stirnfläche der Schaufeln anschließt. Dabei wird die Spaltbreite zwischen der Gehäusewand und den Schaufeln auf das durch Toleranzen und Wärmedehnungen minimal erforderliche Maß eingestellt.

In der Folge wird die vorliegende Erfindung anhand der in den Figuren dargestellten Ausführungsvarianten näher erläutert. Es zeigen:
- Fig. 1: einen Schnitt durch eine erfindungsgemäße Radialpumpe mit einem Laufrad entsprechend der Erfindung;

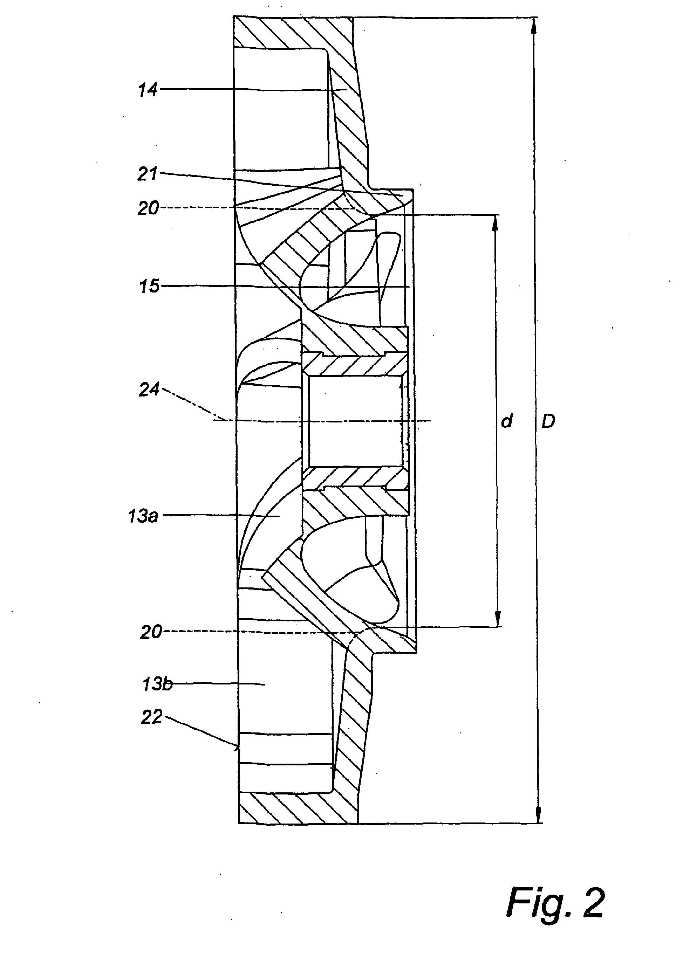

- Fig. 2: einen Schnitt des Laufrads von Fig. 1 in einem vergrößerten Maßstab;

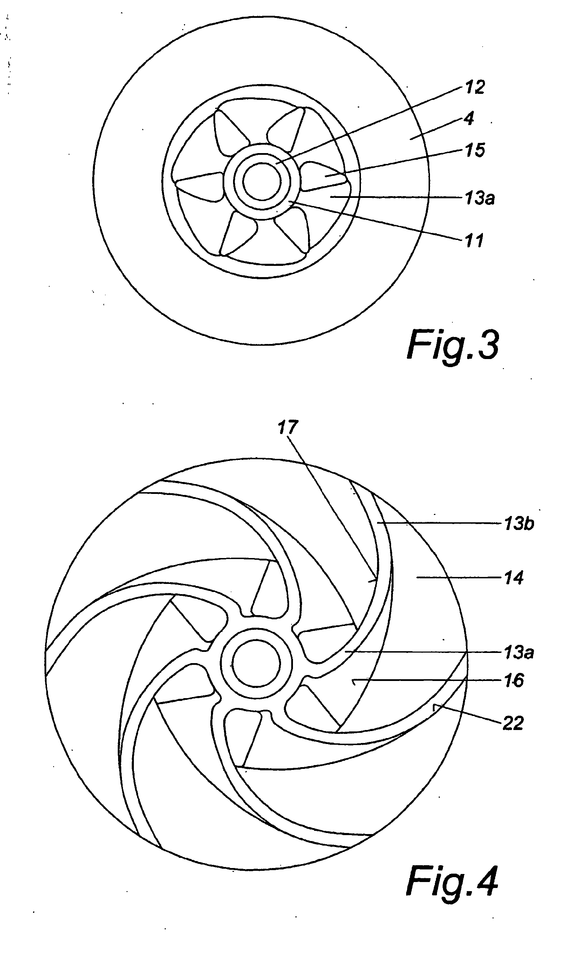

- Fig. 3: und 4 Ansichten des erfindungsgemäßen Laufrades von der Saugseite bzw. von der Druckseite;

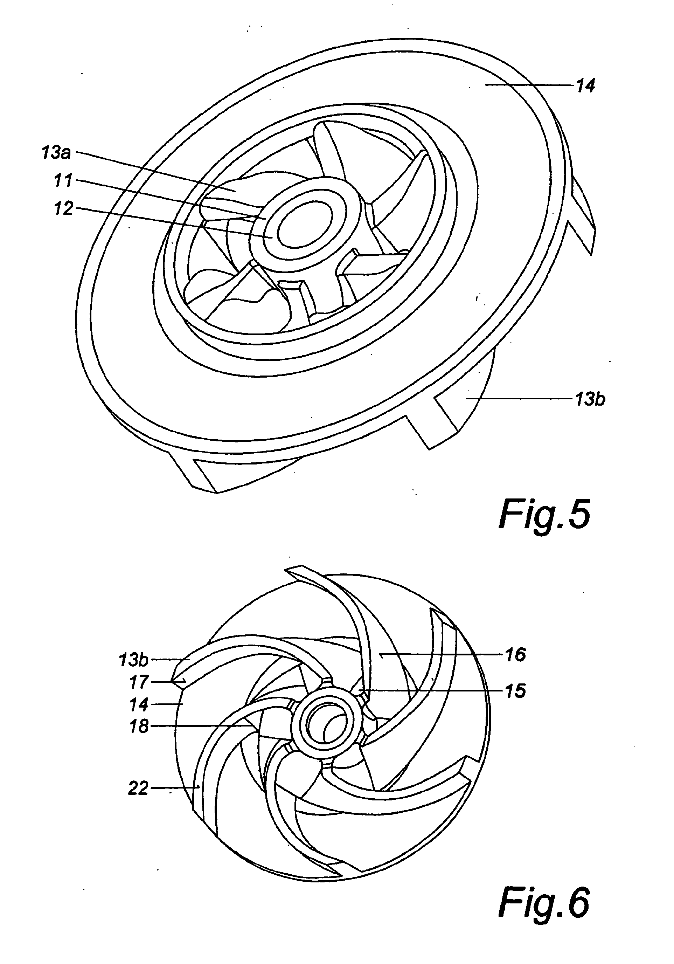

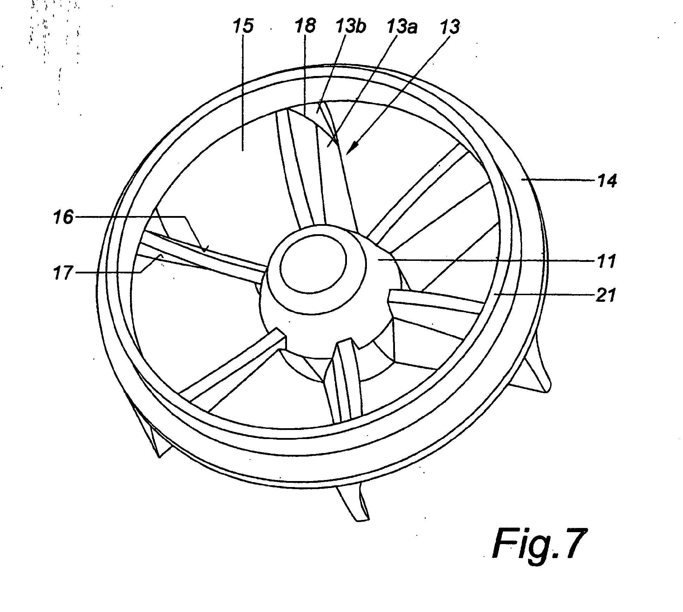

- Fig. 5: und 6 axonometrische Ansichten von der Saugseite bzw. von der Druckseite; und
- Fig. 7: ein Laufrad für eine Axialpumpe in einer axonometrischen Ansicht.

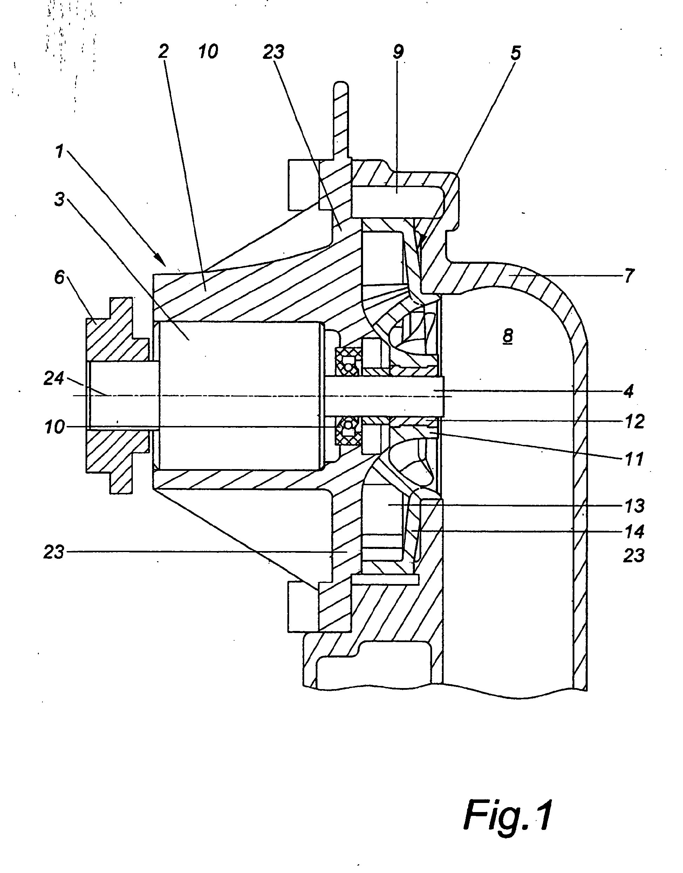

Die Radialpumpe von Fig. 1 besteht aus einem nur teilweise dargestellten Gehäuse 1, mit einem Lagerteil 2 und einer Gehäusewand 23. Durch ein nur schematisch dargestelltes Lager 3 ist eine Pumpenwetie 4 gelagert, an deren einem Ende ein Laufrad 5 befestigt ist. Am gegenüberliegenden Ende der Pumpenwelle 4 ist eine Riemenscheibe 6 zum Antrieb der Pumpe angeordnet. An der Gehäusewand 23 ist ein Pumpendeckel 7 befestigt, der den Saugraum 8 der Pumpe umschließt. In Radialrichtung außerhalb des Laufrades 5 ist der Druckraum 9 der Pumpe angeordnet. Eine Gleitringdichtung 10 dichtet Saugraum 8 und Druckraum 9 gegenüber dem Lagerteil 2 ab.

Das Laufrad 5 besteht aus einem Nabenabschnitt 11, der über eine Buchse 12 an der Pumpenwelle 4 befestigt ist. Vom -äußeren Umfang des Nabenabschnittes 11 gehen Schaufeln 13 aus, die zur Förderung des Fördermediums ausgebildet sind. Die Schaufeln 13 sind einstückig mit einer saugseitigen Deckscheibe 14 verbunden, die eine zentrale Öffnung 15 aufweist, durch die das Fördermedium angesaugt wird. Auf der gegenüberliegenden Seite ist das Laufrad 5 völlig offen, d.h., dass die Schaufeln 13 eine freie Stirnfläche aufweisen, die nicht überdeckt ist.

Die Schaufeln 13 besitzen einen inneren Abschnitt 13a im Bereich der Öffnung 15 und einen äußeren Abschnitt 13b im Bereich der Deckscheibe 14. Der Durchmesser d der Öffnung 15 beträgt etwa die Hälfte des Durchmessers D des Laufrades 5.

Der innere Abschnitt 13a der Schaufeln 13 ist schneckenförmig gekrümmt, jedoch in axialer Richtung frei von Überlappungen oder Überschneidungen, um eine einfache Entformbarkeit sicherzustellen. Im äußeren Abschnitt 13b besitzen die Schaufeln 13, abgesehen von eventuellen Gussschrägen, einen rechteckigen Querschnitt, der rechtwinkelig auf die Deckscheibe 14 steht, um auch hier eine einfache Entformbarkeit zu sichern.

Eine konvexe Oberfläche 16 der Schaufeln 13 erstreckt sich glattflächig vom inneren Abschnitt 13a zum äußeren Abschnitt 13b. Der konvexen Oberfläche 16 gegenüberliegend ist eine konkave Oberfläche 17 ausgebildet. In der konkaven Oberfläche 17 ist vom inneren Abschnitt 13a zum äußeren Abschnitt 13b eine Kante 18 ausgebildet, die gusstechnisch erforderlich ist. Die Deckscheibe 14 ist am Übergang zur Öffnung 15 bei 20 verrundet, um eine optimale Strömungsumlenkung zu erreichen. Ein axialer Vorsprung 21 im Bereich der Öffnung 15 ermöglicht eine weitere Strömungsoptimierung. Im äußeren Abschnitt 13b weisen die Schaufeln 13 an der Druckseite eine Stirnfläche 22 auf, die in einer zur Achse 24 des Laufrades 5 senkrechten Ebene liegt.

In Fig. 7 ist ein Axiallaufrad dargestellt. Gleichartige Teile sind mit den selben Bezugszeichen bezeichnet. Unterschiedlich zu der obigen Ausführungsvariante sind vor allem die Proportionen. So ist naturgemäß die Öffnung 15 wesentlich größer als bei der Radislvanante. Axialpumpen mit einem solchen Laufrad werden dort angezeigt sein, wo der Außendurchmesser aus konstruktiven Gründen limitiert ist. Insbesondere werden dabei mehrstufige Ausführungsvarianten in Betracht kommen.

Mit dem erfindungsgemäßen Laufrad können Pumpen mit hohem Wirkungsgrad kostengünstig, dargestellt werden, der mit dem von Pumpen mit geschlossenen Laufrädern vergleichbar ist. Dabei ist das Laufrad aufgrund seiner leichten Entformbarkeit gusstechnisch sehr leicht herstellbar. Überdies hat ein solches Laufrad hervorragende Kavitationseigenschaften.

## Patentansprüche

1. Laufrad für eine Pumpe, insbesondere für eine Kühlwasserpumpe einer Brennkraftmaschine mit innerer Verbrennung, mit einer Nabe (11), einer saugseitigen Deckscheibe (14) mit einer zentralen Öffnung (15) zum Ansaugen eines Fördermediums und mit mindestens einer Schaufel (13), die mit der saugseitigen Deckscheibe (14) einstückig verbunden ist und die einen inneren Abschnitt (13a) im Bereich der zentralen Öffnung und einen äußeren Abschnitt (13b) im Bereich der Deckscheibe (14) aufweist, wobei das Laufrad (5) auf der der Deckscheibe (14) gegenüberliegenden Druckseite vollständig offen ausgebildet ist, **dadurch gekennzeichnet, dass** die Schaufel (13) im inneren Abschnitt (13a) dreidimensional gekrümmt und im äußeren Abschnitt (13b) im Wesentlichen zweidimensional gekrümmt ausgebildet ist.

2. Laufrad nach Anspruch 1, **dadurch gekennzeichnet, dass** die Schaufeln (13) frei von Überdeckungen und Hinterschneidungen sind.

3. Laufrad nach einem der Ansprüche 1 oder 2, **dadurch gekennzeichnet, dass** die Schaufeln (13) im Bereich der Deckscheibe (14) zweidimensional gekrümmt und rechtwinkelig zur Ebene der Deckscheibe (14) sind.

4. Laufrad nach einem der Ansprüche 1 bis 3, **dadurch gekennzeichnet, dass** an der Deckscheibe (14) im Bereich der zentralen Öffnung (15) ein axialer Vorsprung (21) vorgesehen ist, der in Richtung der Saugseite vorragt.

5. Laufrad nach Anspruch 1, **dadurch gekennzeichnet, dass** die Schaufel (13) an der Saugseite bündig mit einer Vorderkante des axialen Vorsprungs (21) abschließt.

6. Laufrad nach einem der Ansprüche 1 bis 5, **dadurch gekennzeichnet, dass** die Deckscheibe (14) im Bereich der zentralen Öffnung (15) verrundet ist.

7. Laufrad nach einem der Ansprüche 1 bis 6, **dadurch gekennzeichnet, dass** die Schaufel (13) zumindest im äußeren Abschnitt (13b) an der Druckseite eine Stirnfläche (22) aufweist, die in einer zur Achse (24) des Laufrades (5) senkrechten Ebene liegt.

8. Laufrad nach einem der Ansprüche 1 bis 7, **dadurch gekennzeichnet, dass** die Schaufel (13) eine konvexe Oberfläche (16) aufweist, die glatt von dem inneren Abschnitt (13a) in den äußeren Abschnitt (13b) übergeht.

9. Laufrad nach einem der Ansprüche 1 bis 8, **dadurch gekennzeichnet, dass** die Schaufeln (13) eine konkave Oberfläche (17) aufweisen, die mit einer Kante von dem inneren Abschnitt (13a) in den äußeren Abschnitt (13b) übergeht.

10. Laufrad nach einem der Ansprüche 1 bis 9, **dadurch gekennzeichnet, dass** die Schaufeln (13) im äußeren Abschnitt (13b) einen im Wesentlichen rechteckigen Querschnitt aufweisen.

11. Laufrad nach einem der Ansprüche 1 bis 10, **dadurch gekennzeichnet, dass** die Schaufeln (13) im äußeren Abschnitt (13b) zumindest teilweise einen trapezförmigen Querschnitt aufweisen.

12. Laufrad nach einem der Ansprüche 1 bis 11, **dadurch gekennzeichnet, dass** das Laufrad radiale Ausstoßöffnungen aufweist.

13. Laufrad nach einem der Ansprüche 1 bis 12 **dadurch gekennzeichnet, dass** der Durchmesser (d) der Öffnung (15) der Deckscheibe (14) 30% bis 70%, vorzugsweise etwa 50% des Durchmessers (D) des Laufrads entspricht.

14. Pumpe, insbesondere Kühlwasserpumpe für eine Brennkraftmaschine mit innerer Verbrennung, mit einem Lager (3), in dem eine Pumpenwelle (4) drehbar gelagert ist, die durch eine Gehäusewand (23) hindurchtritt und auf der auf der dem Lager (3) gegenüberliegenden Seite der Gehäusewand (23) ein Laufrad (5) mit axialer Ansaugöffnung und vorzugsweise radialem Ausstoß befestigt ist, **dadurch gekennzeichnet, dass** das Laufrad (5) nach einem der Ansprüche 1 bis 11 ausgebildet ist.

15. Pumpe nach Anspruch 14, **dadurch gekennzeichnet, dass** in der Gehäusewand (23) eine Gleitringdichtung zur Abdichtung der Pumpenwelle (4) vorgesehen ist, die offen im Strom des Fördermediums liegt.

16. Pumpe nach einem der Ansprüche 14 oder 15, **dadurch gekennzeichnet, dass** die Gehäusewand (23) unmittelbar an eine Stirnfläche (22) der Schaufeln (13) anschließt.

## Claims

1. An impeller for a pump, especially for a cooling water pump of an internal combustion engine, comprising a hub (11), a cover disk (14) which is disposed on the intake side and is provided with a central opening (15) for sucking in a conveyed medium, and with at least one blade (14) which is joined integrally with the cover disk (14) on the intake side and is provided with an inner section (13a) located in the region of the central opening and an outer section (13b) located in the region of the cover disk (14), wherein the impeller (5) is provided with a completely open configuration on the pressure side opposite of the cover disk (14), **characterized in that** the blade (13) is curved at least in the interior section (13a) in a three-dimensional manner and is provided in the outer section (13b) with a substantially two-dimensional curvature.

2. An impeller according to claim 1, **characterized in that** the blades (13) are free from coverings or undercuts.

3. An impeller according to claim 1 or 2, **characterized in that** the blades (13) are curved in a two-dimensional manner in the region of the cover disk (14) and are rectangular to the plane of the cover disk (14).

4. An impeller according to one of the claims 1 to 3, **characterized in that** an axial projection (21) is provided on the cover disk (14) in the region of the central opening (15), which projection projects in the direction of the intake side.

5. An impeller according to claim 1, **characterized in that** the blade (13) on the intake side is flush with a front edge of the axial projection (21).

6. An impeller according to one of the claims 1 to 5, **characterized in that** the cover disk (14) is rounded off in the region of the central opening (15).

7. An impeller according to one of the claims 1 to 6, **characterized in that** the blades (13) are provided at least in the outer section (13b) on the pressure side with a face surface (22) which is situated in a plane perpendicular to the axis (24) of the impeller (5).

8. An impeller according to one of the claims 1 to 7, **characterized in that** the blades (13) have a convex surface (16) which converges smoothly from the inner section (13a) to the outer section (13b).

9. An impeller according to one of the claims 1 to 8, **characterized in that** the blades (13) comprise a concave surface (17) which converges with an edge from the inner section (13a) to the outer section (13b).

10. An impeller according to one of the claims 1 to 9, **characterized in that** the blades (13) have in the outer section (13b) a substantially rectangular cross section.

11. An impeller according to one of the claims 1 to 10, **characterized in that** the blades (13) in the outer section (13b) have at least partly a trapezoid cross section.

12. An impeller according to one of the claims 1 to 11, **characterized in that** the impeller comprises radial discharge openings.

13. An impeller according to one of the claims 1 to 12, **characterized in that** the diameter (d) of the opening (15) of the cover disk (14) corresponds to 30% to 70%, preferably approximately 50%, of the diameter (D) of the impeller.

14. A pump, especially a cooling water pump for an internal combustion engine, with a bearing (3) in which a pump shaft (4) is held rotatably which passes through a wall (23) of the housing and to which is fastened an impeller (5) with axial intake opening on the side of the housing wall (23) opposite of the bearing (3) and with preferably radial discharge, **characterized in that** the impeller (5) is configured according to one of the claims 1 to 11.

15. A pump according to claim 14, **characterized in that** an axial face seal for sealing the pump shaft (4) is provided in the wall (23) of the housing, which seal is situated openly in the flow of the conveying medium.

16. A pump according to one of the claims 14 or 15, **characterized in that** the wall (23) of the housing is directly adjacent to a face side (22) of the blades (13).

## Revendications

1. Rotor de pompe, notamment de pompe d'eau de refroidissement d'un moteur à combustion interne, comportant un moyeu (11), un disque de couverture (14) côté aspiration avec une ouverture centrale (15) pour aspirer le milieu à transférer et au moins une aube (13) reliée en une seule pièce au disque de couverture (14) côté aspiration et ayant un segment intérieur (13a) au niveau de l'orifice central et un segment extérieur (13b) au niveau du disque de couverture (14), le rotor (5) étant complètement ouvert sur le côté refoulement à l'opposé du disque de couverture (14),
**caractérisé en ce que**
le segment intérieur (13a) de l'aube (13) a une courbure en trois dimensions et son segment extérieur (13b) a une courbure principalement en deux dimensions.

2. Rotor selon la revendication 1,
**caractérisé en ce que**
les aubes (13) ne comportent ni partie en chevauchement ni partie en contre-dépouille.

3. Rotor selon l'une des revendications 1 ou 2,
**caractérisé en ce que**
les aubes (13) sont cintrées en deux dimensions au niveau du disque de recouvrement (14) et perpendiculairement au plan du disque de recouvrement (14).

4. Rotor selon l'une des revendications 1 à 3,
**caractérisé en ce qu'**
au niveau de l'ouverture centrale (15), le disque de recouvrement (14) comporte une partie en saillie axiale (21) dirigée vers le côté aspiration.

5. Rotor selon la revendications 1,
**caractérisé en ce que**
l'aube (13) se termine à niveau avec l'arête avant de la saillie axiale (21) du côté aspiration.

6. Rotor selon l'une des revendications 1 à 5,
**caractérisé en ce qu'**
au niveau de l'ouverture centrale (15) le disque de recouvrement (14) est arrondi.

7. Rotor selon l'une des revendications 1 à 6,
**caractérisé en ce qu'**
au moins dans son segment extérieur (13b), l'aube (13) présente une surface frontale (22) du côté pression qui se situe dans un plan perpendiculaire à l'axe (24) du rotor (5).

8. Rotor selon l'une des revendications 1 à 7,
**caractérisé en ce que**
l'aube (13) a une surface convexe (16) qui passe de façon lisse du segment intérieur (13a) vers le segment extérieur (13b).

9. Rotor selon l'une des revendications 1 à 8,
**caractérisé en ce que**
les aubes (13) ont une surface concave (17) avec une arête entre le segment intérieur (13a) et le segment extérieur (13b).

10. Rotor selon l'une des revendications 1 à 9,
**caractérisé en ce que**
les aubes (13) ont une section principalement rectangulaire dans leur partie extérieure (13b).

11. Rotor selon l'une des revendications 1 à 10,
**caractérisé en ce que**
dans leur segment extérieur (13b), les aubes (13) ont au moins en partie une section trapézoïdale.

12. Rotor selon l'une des revendications 1 à 11,
**caractérisé en ce que**
le rotor présente des orifices de refoulement radiaux.

13. Rotor selon l'une des revendications 1 à 12,
**caractérisé en ce que**
le diamètre (d) de l'ouverture (15) du disque de recouvrement (14) représente entre 30 % et 70 % et de préférence environ 50 % du diamètre (D) du rotor.

14. Pompe, notamment pompe à eau de refroidissement pour un moteur à combustion interne, comportant un palier (3) logeant à rotation un axe de pompe (4) traversant une paroi de boîtier (23) et dont le côté opposé à la paroi (23) par rapport au palier (3) comporte un rotor (5) avec un orifice d'aspiration axial et de préférence une sortie radiale,
**caractérisée en ce que**
le rotor (5) est réalisé selon l'une des revendications 1 à 11.

15. Pompe selon la revendication 14,
**caractérisée en ce que**
la paroi de boîtier (23) comporte un joint lisse pour assurer l'étanchéité de l'axe (4) de la pompe et qui est ouvert, exposé à la veine de fluide transféré.

16. Pompe selon l'une des revendications 14 ou 15,
**caractérisée en ce que**
la paroi (23) du boîtier rejoint directement la surface frontale (22) des aubes (13).
